# EUROPEAN PATENT SPECIFICATION

(11) **EP 4 372 405 B1**
(45) Date of publication and mention of the grant of the patent: **17.09.2025**
(21) Application number: 22207496.5
(22) Date of filing: 15.11.2022
(51) Int. Cl.: G01S 7/41, G01S 13/50, G01S 13/88, G06F 3/01

(54) **APPARATUS AND COMPUTER-IMPLEMENTED METHOD FOR GESTURE DETECTION, RADAR SYSTEM AND ELECTRONIC DEVICE**
VORRICHTUNG UND COMPUTERIMPLEMENTIERTES VERFAHREN ZUR GESTENERKENNUNG, RADARSYSTEM UND ELEKTRONISCHE VORRICHTUNG
APPAREIL ET PROCÉDÉ MIS EN UVRE PAR ORDINATEUR POUR LA DÉTECTION DE GESTES, SYSTÈME RADAR ET DISPOSITIF ÉLECTRONIQUE

(43) Date of publication of application: 22.05.2024
(73) Proprietor: Infineon Technologies AG, 85579 Neubiberg (DE)
(72) Inventor: STROBEL, Maximilian, 81539 München (DE); SCHOENFELDT, Stephan, 85667 Oberpframmern (DE); STADELMAYER, Thomas Reinhold, 93173 Wenzenbach (DE); PAVLOV, Ivan, 81379 München (DE)
(74) Representative: 2SPL Patentanwälte PartG mbB

(56) References cited:
- EP-A1- 3 598 171
- WO-A1-2016/138238
- SUN YULIANG ET AL: "Gesture Classification with Handcrafted Micro-Doppler Features using a FMCW Radar", 2018 IEEE MTT-S INTERNATIONAL CONFERENCE ON MICROWAVES FOR INTELLIGENT MOBILITY (ICMIM), IEEE, 15 April 2018 (2018-04-15), pages 1 - 4, XP033391313, DOI: 10.1109/ICMIM.2018.8443507

## Description

### Field

The present disclosure relates to gesture detection using radar data. In particular, examples of the present disclosure relate to an apparatus and a computer-implemented method for gesture detection, a radar system and an electronic device.

### Background

Gesture sensing allows to build a touchless Human-Machine Interface (HMI). Gesture sensing based on cameras or Time-of-Flight (ToF) sensors suffer from privacy issues, high processing costs (i.e., high computational load), high power consumption and industrial design impacts.

Conventional radar based gesture sensing approaches are prone to noise in the radar raw data. Moreover, these approaches suffer from overfitting to irrelevant features and high processing costs. Furthermore, conventional radar based gesture sensing approaches tend to be strongly coupled to radar parameters. Also, data augmentation is difficult.

Document WO 2016/138238 A1 relates to a method for operating a radar system, specifically a Frequency Modulated Continuous Wave (FMCW) radar system. The method involves generating digital Intermediate Frequency (IF) signals from radio frequency signals received by a small receive antenna array in the FMCW radar system. The generated digital IF signals are then processed to determine whether a gesture was performed.

There may be a demand for improved gesture detection based on radar data.

### Summary

This demand is met by the subject-matter of the independent claims. Advantageous embodiments are addressed by the dependent claims.

According to a first aspect, the present disclosure provides an apparatus for gesture detection. The apparatus comprises interface circuitry configured to receive radar data indicating one or more measurement signal of a FMCW radar sensor. Further, the apparatus comprises processing circuitry coupled to the interface circuitry and being configured to determine a multidimensional array representation of the radar data. The processing circuitry is additionally configured to continuously determine a range of a person nearest to the FMCW radar sensor from the multidimensional array representation of the radar data. In addition, the processing circuitry is configured to define a gesture detection zone and dynamically update the gesture detection zone based on the continuously determined range of the person. The gesture detection zone covers exclusively ranges up to the determined range of the person. The processing circuitry is configured to search exclusively the gesture detection zone for hand movements of the person. If a hand movement of the person is detected in the gesture detection zone, the processing circuitry is configured to extract a time-series of one or more feature of the hand movement. Further, the processing circuitry is configured to determine a gesture of the person based on the time-series of the one or more feature of the hand movement.

According to a second aspect, the present disclosure provides a radar system comprising an apparatus for gesture detection according to the present disclosure. The radar system additionally comprises a FMCW radar sensor configured to transmit radio frequency waves into a field of view of the FMCW radar sensor and generate the radar data based on received reflections of the transmitted radio frequency waves.

According to a third aspect, the present disclosure provides an electronic device comprising a radar system according to the present disclosure and control circuitry configured to control operation of the electronic device based on the determined gesture.

According to a fourth aspect, the present disclosure provides a computer-implemented method for gesture detection. The method comprises receiving radar data indicating one or more measurement signal of a FMCW radar sensor. Further, the method comprises determining a multidimensional array representation of the radar data. The method additionally comprises continuously determining a range of a person nearest to the FMCW radar sensor from the multidimensional array representation of the radar data. In addition, the method comprises defining a gesture detection zone and dynamically updating the gesture detection zone based on the continuously determined range of the person. The gesture detection zone covers exclusively ranges up to the determined range of the person. Further, the method comprises searching exclusively the gesture detection zone for hand movements of the person. If a hand movement of the person is detected in the gesture detection zone, the method comprises extracting a time-series of one or more feature of the hand movement. In addition, the method comprises determining a gesture of the person based on the time-series of the one or more feature of the hand movement.

According to a fifth aspect, the present disclosure provides a non-transitory machine-readable medium having stored thereon a program having a program code for performing the method for gesture detection according to the present disclosure, when the program is executed on a processor or a programmable hardware.

According to a sixth aspect, the present disclosure provides a program having a program code for performing the method for gesture detection according to the present disclosure, when the program is executed on a processor or a programmable hardware.

The search for hand movements of the person exclusively in the gesture detection zone together with the extraction of a time-series of one or more feature of the hand movement allow to provide physical measurements which allow to focus on only relevant data, reduce the processing footprint (e.g., computation and memory consumption) compared to conventional approaches, and radar parameter agnostic gesture sensing. Moreover, the physical measurements may allow data augmentation, synthetic data generation and data inspection.

### Brief description of the Figures

Some examples of apparatuses and/or methods will be described in the following by way of example only, and with reference to the accompanying figures, in which
Fig. 1 illustrates an exemplary radar system comprising an example of an apparatus for gesture detection;
Fig. 2 illustrates an exemplary process flow for determining a range-Doppler representation;
Fig. 3 illustrates an exemplary process flow for determining a range-angle representation;
Fig. 4 illustrates an exemplary scene;
Fig. 5 illustrates an exemplary search in a range-Doppler representation for the person nearest to the FMCW radar sensor;
Fig. 6 illustrates an exemplary gesture detection zone;
Fig. 7 illustrates an exemplary effect of the gesture detection zone;
Fig. 8 illustrates an exemplary definition of the gesture detection zone in a range-Doppler representation;
Fig. 9 illustrates an exemplary definition of the gesture detection zone in a range-angle representation;
Fig. 10 illustrates exemplary features of the hand movement;
Fig. 11 illustrates an example of an electronic device comprising a radar system; and
Fig. 12 illustrates a flowchart of an example of a method for gesture detection.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

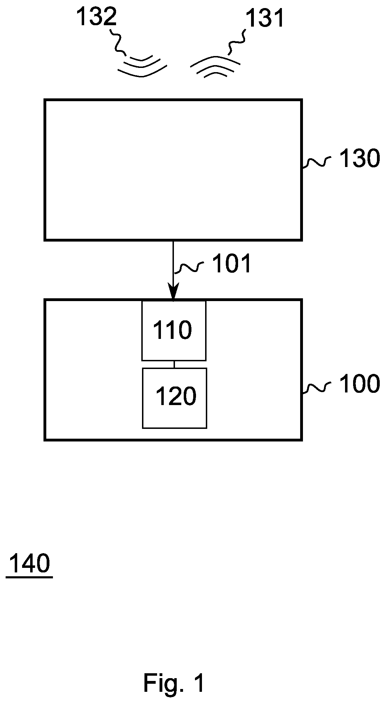

**Fig. 1** illustrates an exemplary radar system 140 comprising a Frequency-Modulated Continuous-Wave (FMCW) radar sensor 130 and an apparatus 100 for gesture detection according to the present disclosure.

The FMCW radar sensor 130 is configured to transmit radio frequency waves 131 into a Field of View (FoV) 133 of the FMCW radar sensor 130. The radio frequency waves 131 exhibit a frequency of, e.g., at least 300 MHz and at maximum 300 GHz. The FMCW radar sensor 130 may comprise one or more transmit antenna (not illustrated in Fig. 1) for emitting the radio frequency waves 131 into the field of view 133. Additionally, the FMCW radar sensor 130 may comprise transmit circuitry for generating one or more transmit signal comprising multiple pulses (e.g., chirps), the one or more transmit signal driving the one or more transmit antenna to emit the radio frequency waves 131. For example, the one or more transmit signal may each comprise one or more frames each comprising a plurality of chirps.

The FMCW radar sensor 130 receives reflections 132 of the transmitted radio frequency waves 131 from one or more object present in the field of view 133. The FMCW radar sensor 130 is configured to generate radar data 101 based on the received reflections 132. The radar data 101 indicate one or more measurement signal of the FMCW radar sensor 130 for the received reflections 132. For example, the FMCW radar sensor 130 may be configured to generate one measurement signal for each receive antenna of the FMCW radar sensor 130. The FMCW radar sensor 130 may comprise one or more receive antenna (not illustrated in Fig. 1) for receiving the reflections 132 and generating a respective antenna receive signal. Additionally, the FMCW radar sensor 130 may comprise receive circuitry for generating the radar data 101 based on the one or more antenna receive signal. For example, in case the FMCW radar sensor 130 comprises a plurality of receive antennas configured to receive the reflections 132 of the transmitted radio frequency waves 131 and generate a respective antenna receive signal, the radar data 101 may be indicative of a plurality of measurement signals generated by the FMCW radar sensor 130 based on the respective antenna receive signal.

The radar data 101 may, e.g., comprise multiple samples where each sample may be a digital number between 0 and (2^{N})-1 indicating (representing) a digitized amplitude or voltage of the respective measurement signal, or a normalized value thereof. N may be the resolution of the radar data 101 (which may, e.g., be determined by the resolution of an Analog-to-Digital Converter, ADC, of the FMCW radar sensor 130 sampling the respective antenna receive signal or measurement signal). The radar data 101 may be considered as "raw data" of the FMCW radar sensor 130 such as an output of an ADC of the FMCW radar sensor 130. For example, the radar data 101 may be obtained by sampling and digitizing the one or more measurement signal or the one or more antenna receive signal.

The apparatus 100 for gesture detection comprises interface circuitry 110 configured to receive the radar data 101. The interface circuitry 110 is communicatively coupled (e.g., wired or wireless communication) to the FMCW radar sensor 130 in the example of Fig. 1. However, it is to be noted that the apparatus 100 need not be coupled to the FMCW radar sensor 130 in other examples of the present disclosure. For example, the apparatus 100 may be provided independent from the FMCW radar sensor 130. For example, the interface circuitry 110 may be communicative coupled (e.g., wired or wireless communication) to a storage device (not illustrated) storing the radar data 101.

The apparatus 100 further comprises processing circuitry 120 coupled to the interface circuitry 110. For example, the processing circuitry 120 may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA). The processing circuitry 120 may optionally be coupled to, e.g., read only memory (ROM) for storing software, random access memory (RAM) and/or non-volatile memory. The processing circuitry 120 is configured to process the radar data 101.

In particular, the processing circuitry 120 is configured to determine a multidimensional array representation of the radar data 101. The multidimensional array representation of the radar data 101 is a representation of the radar data in which quantities derived from the radar data 101 are represented (arranged) in a multidimensional array. A multidimensional array is an array with two or more dimensions.

For example, the multidimensional array representation of the radar data 101 may be a two-dimensional array representation of the radar data 101 such as a range-Doppler representation (also known as "range-velocity representation") or a range-angle representation. The range-Doppler representation is also known as "range-Doppler map" or "range-Doppler image". The range-angle representation is also known as "range-angle map" or "range-angle image".

The range-Doppler representation is a two-dimensional array where range values are associated with the Doppler frequency (or velocity such as radial velocity) values determined for one or more object at the respective range (e.g., radial velocity of the object). It is irrelevant whether the Doppler frequency or the velocity is used in the range-Doppler representation as these quantities are equivalent to each other.

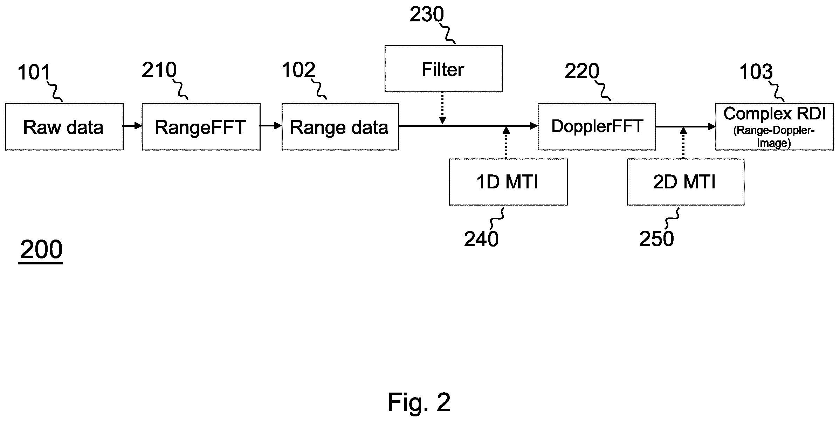

Different techniques for determining the range-Doppler representation from radar data are well known to those skilled in the art. An exemplary technique using two subsequent Fourier-transformations on the radar data 101 is illustrated in **Fig. 2****.**

Fig. 2 illustrates an exemplary process flow 200 for determining a range-Doppler representation from the radar data 101 (which may be considered as "raw data" of the FMCW radar sensor). The process flow 200 is performed by the processing circuitry 120. As indicated in Fig. 2, two Fourier-transformations 210 and 220 are subsequently applied to the radar data 101 in order to obtain the range-Doppler representation 103 of the radar data 101 (being an example for a multidimensional array representation of the radar data 101). The two Fourier-transformations 210 and 220 are equivalent to a two-dimensional Fourier-transformation on the radar data 101. For example, as indicated in Fig. 2, the two Fourier-transformations 210 and 220 may be implemented as Fast Fourier-Transformations (FFTs).

The processing circuitry 120 is configured to determine a range representation 102 of the radar data 101 in the course of determining the range-Doppler representation 103 of the radar data 101. The range representation 102 may be considered a (two-dimensional) data structure where range values are arranged into a fast time over slow time matrix. In general, the processing circuitry 120 may be configured to determine the range representation 102 by determining a respective range slice (range profile) for each received reflection (of a set of received reflections) and arrange (structure) the resulting range slices along slow time. A range slice may indicate range values over slow time.

For obtaining the range slices, the processing circuitry 120 may correlate (e.g., a carrier-removed and digitized version of) each pulse of a set of emitted pulses with its corresponding received reflection (e.g., with a carrier-removed and digitized version thereof), yielding a respective correlation series over slow time. The correlation series may exhibit at least one peak correlation which indicates presence of an object (e.g., the correlation may have a proportional relation to the range of an object). The range slices may be determined by translating the correlation series into range values according to a predefined correlation-range relation. Optionally, range binning may be applied on the correlation series for determining the range values. Each range slice may be arranged into a respective row of a matrix, yielding the range representation. In the example of Fig. 2, the processing circuitry 120 is configured to determine the range representation by performing the first Fourier-transformation 210 on the radar data 101 along fast time. The above described correlation is performed by using the first Fourier-transformation 210 in the example of Fig. 2. In this manner, the correlation may be determined very efficient. In other words, the output of the first Fourier-transformation 210 on the radar data 101 is the range representation 102 of the radar data 101.

In order to obtain the range-Doppler representation 103 of the radar data 101, the processing circuitry 120 performs the second Fourier-transformation 220 on the range representation 102 of the radar data 101. For example, the processing circuitry 120 may Fourier-transform (over slow time) each column of the range representation 102 of the radar data 101. From the transformed columns (frequency spectra of the range representation), the Doppler frequency (or velocity) values may be derived since a change of range over slow time indicates a motion of an object. The range-Doppler representation 103 may allow efficient and reliable object detection.

Optionally, different types of Moving Target Indication (MTI) processing may be performed by the processing circuitry 120 to suppress static (i.e., non-moving) targets. For example, the range representation 102 of the radar data 101 may be subject to one-dimensional MTI processing 240 to suppress static targets. Accordingly, the second Fourier-transformation is applied to the MTI processed range representation 102 of the radar data 101. Alternatively or additionally, the range-Doppler representation 103 of the radar data 101 may be subject to two-dimensional MTI processing 250 to suppress static targets. The one-dimensional MTI processing 240 as well as the two-dimensional MTI processing 250 may both, e.g., be frame-based or be exponentially averaged over the last frames.

Further additionally or alternatively, the processing circuitry 120 may be configured to filter the range representation 102 of the radar data 101 in the time domain to limit a frequency spectrum of the range-Doppler representation 103 of the radar data 101 (being an example for a multidimensional array representation of the radar data 101). For example, one or more of Finite Impulse Response (FIR) filtering, Infinite Impulse Response (IIR) filtering and sinc filtering may be used to limit the frequency spectrum of the range-Doppler representation 103 of the radar data 101. Limiting the frequency spectrum of the range-Doppler representation 103 of the radar data 101 may allow to focus on specific Doppler-frequency (velocity) value ranges in the subsequent processing of the range-Doppler representation 103 of the radar data 101. For example, the frequency spectrum of the range-Doppler representation 103 of the radar data 101 may be limited to value ranges relevant for gesture detection in order to reduce the computation costs (efforts) for the subsequent processing of the range-Doppler representation 103 of the radar data 101.

Still further additionally or alternatively, the processing circuitry 120 may be configured to filter the radar data 101 before performing the first Fourier-transformation 210. For example, mean removal filtering may be performed along each chirp to get rid of antenna leakage between the antennas of the FMCW radar sensor 130.

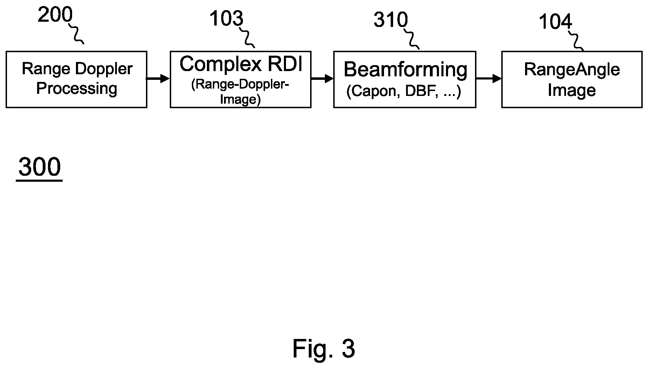

Returning back to Fig. 1, it was described above that the multidimensional array representation of the radar data 101 may alternatively be a range-angle representation of the radar data 101. The range-angle representation is a two-dimensional array where range values are associated with Angle of Arrival (AoA) values determined for reflections received from one or more object at the respective range. For example, the range-angle representation of the radar data 101 may be used in case the radar data 101 are indicative of a plurality of measurement signals generated by the FMCW radar sensor 130 such that phase differences between the various antennas of the FMCW radar sensor 130 may be used to determine the AoA. Different techniques for determining the range-angle representation from radar data are well known to those skilled in the art. An exemplary technique is illustrated in **Fig. 3****.**

Fig. 3 illustrates an exemplary process flow 300 for determining a range-angle representation from the radar data 101. In the example of Fig. 3, a respective range-Doppler representation 103 of the radar data 101 is determined by the processing circuitry 120 for each of a plurality of measurement signals represented by the radar data 101 according to the process flow 200 illustrated in Fig. 2 and described above.

Beamforming processing 310 is performed by the processing circuitry 120 on the range-Doppler representations 103 of the radar data 101 for the plurality of measurement signals. For example, a Capon algorithm or Digital BeamForming (DBF) may be used to determine the AoA values associated with the different ranges. Accordingly, a range-Doppler-angle representation of the radar data 101 (i.e. a three-dimensional array representation of the radar data 101) is obtained. By integrating over the Doppler-dimension, the range-Doppler-angle representation of the radar data 101 is converted to a range-angle representation 104 of the radar data 101, which is the output of the beamforming processing 310.

In other examples, range processing such as the first Fourier-transformation 210 may be performed on the radar data 101 to obtain a range representation of the radar data 101. Subsequently, beamforming processing as described above may be done for each range bin of the range representation to obtain a range-angle representation of the radar data 101.

Returning back to Fig. 1, the multidimensional array representation of the radar data 101 may be a three-dimensional array representation of the radar data 101 such as a data cube in other examples of the present disclosure. For example, in case the radar data 101 are indicative of a plurality of measurement signals generated by the FMCW radar sensor 130, a two-dimensional array representation of the radar data 101 (e.g. a range-Doppler representation) may be generated for each of the plurality of measurement signals and the two-dimensional array representations of the radar data 101 may be stacked in a third dimension (orthogonal to the other dimensions in which the two-dimensional array representations of the radar data 101 extend) to form the data cube. In other words, the data cube is an array of two or more two-dimensional arrays. Although this data structure is referred to as a "cube" it is to be noted that the extensions (i.e. the number of data entries) of the data cube in the various dimensions need not be the same. For example, a respective range-Doppler representation may be determined for each of the plurality of measurement signals according to the technique described above with reference to Fig. 2 and stacked in a third dimension such that the phase information between the antennas may be used to localize an object such as a person's hand in three-dimensional space.

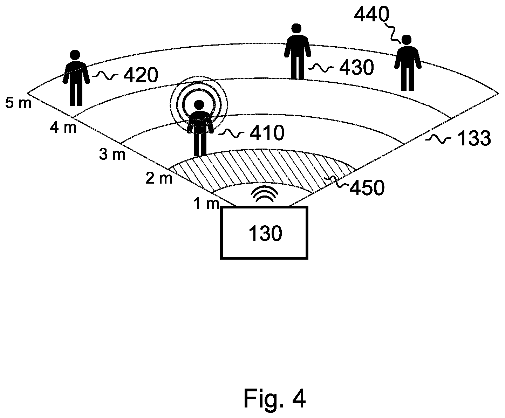

The processing circuitry 120 is further configured to determine a range of a person nearest to the FMCW radar sensor 130 from the multidimensional array representation of the radar data 101. An exemplary scene 400 is illustrated in **Fig. 4****.** Four persons 410, 420, 430 and 440 are present in the scene, i.e., the FoV 133 of the FMCW radar sensor 130. Accordingly, each person causes a respective entry in the multidimensional array representation of the radar data 101. The person 410 is closest to the FMCW radar sensor 130 at a range of approx. 2 m. Accordingly, it is determined from the entries of the persons 410, 420, 430 and 440 in the multidimensional array representation of the radar data 101 that the person 410 is closest to the FMCW radar sensor 130.

Referring back to Fig. 1, various techniques may be used for determining the range of the person nearest to the FMCW radar sensor 130. A suitable technique may be selected according to the type of the multidimensional array representation of the radar data 101. For example, different technique may be used for determining the range of the person nearest to the FMCW radar sensor 130 in a range-Doppler representation of the radar data 101 and a range-angle representation of the radar data 101.

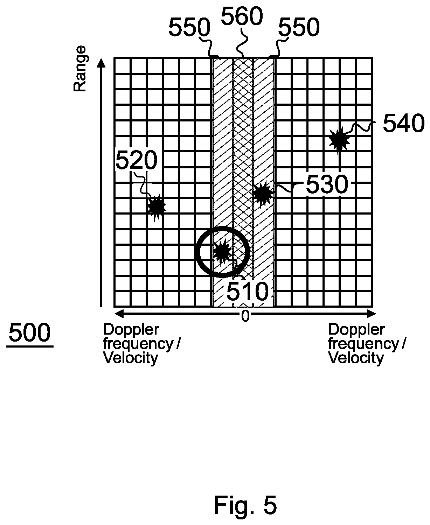

An exemplary technique for searching the person nearest to the FMCW radar sensor in a range-Doppler representation of the radar data 101 is illustrated in **Fig. 5****.** A range-Doppler representation 500 of the radar data 101 is illustrated in Fig. 5. The abscissa denotes the Doppler frequency (velocity) and the ordinate donates the range.

To determine the range of the person nearest to the FMCW radar sensor 130, the processing circuitry 120 is configured to search (only, exclusively) in a predefined first sub-range 550 in the range-Doppler representation 500. In particular, the processing circuitry 120 is configured to search for entries having an amplitude above a first amplitude threshold (only, exclusively) in the predefined first sub-range 550. As indicated in Fig. 5, the predefined first sub-range 550 covers exclusively non-zero velocities (which corresponds to a non-zero Doppler frequency) below a predefined velocity threshold (which corresponds to predefined Doppler frequency threshold). This accounts for the fact that vital signs and random body movements such as unintentional motions manifest in a low velocity (i.e., a low Doppler frequency). Random body movements and vital signals, hence, allow to determine the position of a person. In particular, the velocity threshold is selected to cover only low velocities. Further, searching only in the predefined first sub-range 550 allows to ignore static targets (objects) in the scene. Static targets would be located in the further sub-range 560 around zero velocity/Doppler frequency. Due to the constraint on the velocity, the space to be searched in the range-Doppler representation 500 is significantly reduced so that processing costs (efforts) are lowered compared to conventional approaches without this constraint. Furthermore, false alarms caused by static targets or targets with high velocity may be avoided or at least reduced.

As described above, entries having an amplitude above the first amplitude threshold are searched. The first amplitude threshold accounts for the fact that the human body has a large radar cross-section. Hence, the first amplitude threshold allows to separate the human body from noise and small targets (e.g., a hand or another object). The first amplitude threshold may be predefined or be adaptive. For example, the first amplitude threshold may be dynamically adapted based on a Constant False Alarm Rate (CFAR) determined by the processing circuitry 120.

In the example of Fig. 5, four entries 510, 520, 530 and 540 are above the first amplitude threshold. The entries 520 and 540 are ignored as they are outside the predefined first sub-range 550 and are, hence, likely not to represent a gesturing person. That is, only the entries 510 and 530 within the predefined first sub-range 550 are taken into account.

The processing circuitry 120 is configured to select the entry in the predefined sub-range 550 having the shortest range to the FMCW radar sensor 130 as entry representing the person nearest to the FMCW radar sensor 130. In the example of Fig. 5, the range of the entry 510 is shorter than the range of the entry 530. Therefore, the entry 510 is selected as entry representing the person nearest to the FMCW radar sensor 130 in the example of Fig. 5. Accordingly, the range of the selected entry 510 is determined to be the range of the person nearest to the FMCW radar sensor 130.

A similar approach may be used if the multidimensional array representation of the radar data 101 is a range-angle representation of the radar data 101. To determine the range of the person nearest to the FMCW radar sensor, the processing circuitry 120 is configured to search (only, exclusively) in a predefined first sub-range in the range-angle representation of the radar data 101. In particular, the processing circuitry 120 may be configured to search for entries having an amplitude above a first amplitude threshold in the predefined first sub-range in the range-angle representation of the radar data. The predefined first sub-range covers exclusively angles below a predefined angle threshold. This accounts for the fact that the one or more measurement signal of the of the FMCW radar sensor 130 degrade significantly at the borders of the FoV of the FMCW radar sensor 130. By restricting the space to be searched to smaller angles, it is possible to ensure that only persons or gestures right in front of the FMCW radar sensor 130, where a good detection performance is achievable, are taken into account. Like the above described constraint on velocity, the constraint on the angle allows to significantly reduce the space to be searched in the range-angle representation so that processing costs (efforts) are lowered compared to conventional approaches with this constraint. Furthermore, false alarms may be avoided or at least reduced.

As described above, the first amplitude threshold accounts for the fact that the human body has a large radar cross-section. Hence, the first amplitude threshold allows to separate the human body from noise and small targets (e.g., a hand or another object). The first amplitude threshold may be predefined or be adaptive (see above for the details). It is to be noted that the first amplitude threshold used for the search in the range-Doppler representation 500 may exhibit a different value than the first amplitude threshold used for the search in the range-angle representation.

The processing circuitry 120 is configured to select the entry in the predefined sub-range of the range-angle representation of the radar data 101 having the shortest range to the FMCW radar sensor 130 and being consistently detected over multiple frames as entry representing the person nearest to the FMCW radar sensor 130. As the range-angle representation for a single frame (i.e., a single range-angle image/map) does not give any information on the velocity of an object, multiple frames are taken into account. Accordingly, a person (statically) standing in front of the FMCW radar sensor 130 can be detected as is occurs consistently over multiple frames. Analogously to what is described above for the search in the range-Doppler representation 500, the processing circuitry 120 is configured to determine the range of the selected entry as the range of the person nearest to the FMCW radar sensor 130.

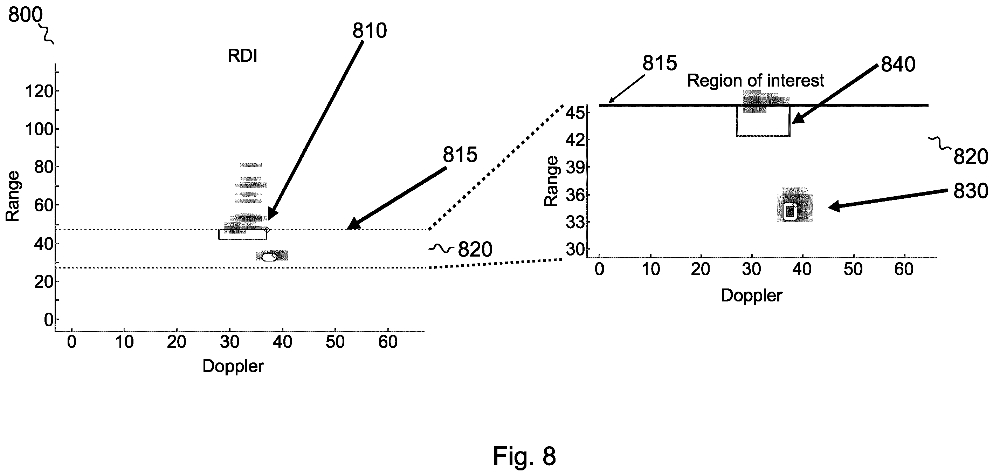

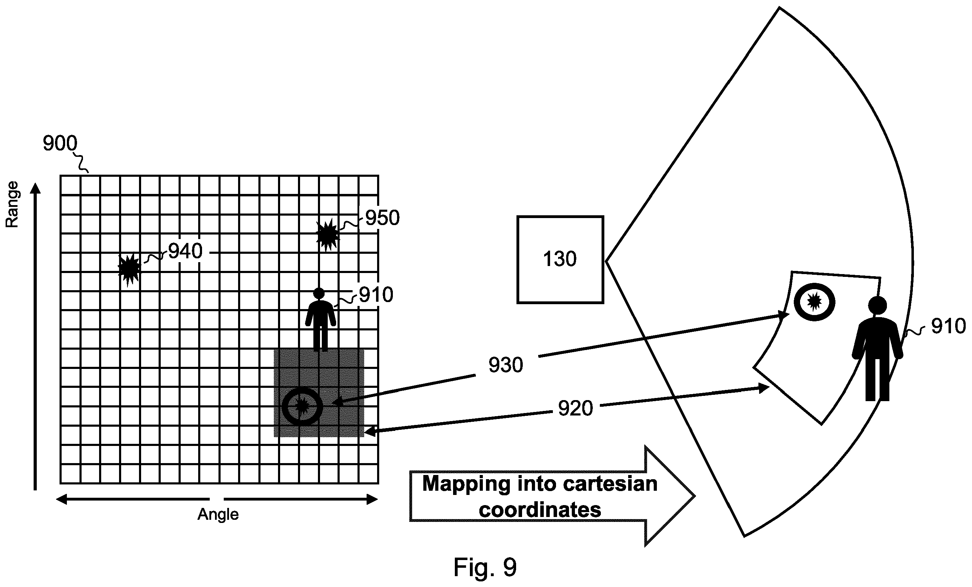

Irrespective of how the person nearest to the FMCW radar sensor 130 is determined, the processing circuitry 120 is configured to define a gesture detection zone based on the determined range of the person, and to search exclusively (only) the gesture detection zone for hand movements of the person. The gesture detection zone covers exclusively ranges up to the determined range of the person nearest to the FMCW radar sensor 130. In other words, the gesture detection zone covers at least part of the space between the FMCW radar sensor 130 and the nearest person. It is to be noted that the gesture detection zone does not cover ranges further away from the FMCW radar sensor 130 than the determined range of the person nearest to the FMCW radar sensor 130. The gesture detection zone is anchored to the determined range of the person nearest to the FMCW radar sensor 130. That is, one boundary of the person nearest to the FMCW radar sensor 130 is determined by the position, i.e., the range of the person nearest to the FMCW radar sensor 130. If the position, i.e., the range of the person nearest to the FMCW radar sensor 130 changes, at least the positioning of the gesture detection zone changes accordingly. The limitation of the search for hand movements to the gesture detection zone allows to reduce the space to be searched to a meaningful space. The definition of the gesture detection zone is based on the finding that a gesture is usually performed by a human towards a device which the human wishes to interact with or control. When performing a gesture, the hand of the human is usually in front of the human body. Accordingly, restricting the gesture detection zone to exclusively ranges up to the determined range of the person allows to exclude the irrelevant space behind the person from the search space. Furthermore, movements or gestures from people further away than the nearest person are ignored. Various techniques may be used for searching the gesture detection zone for hand movements. Two examples will be described later with reference to Fig. 8 and Fig. 9.

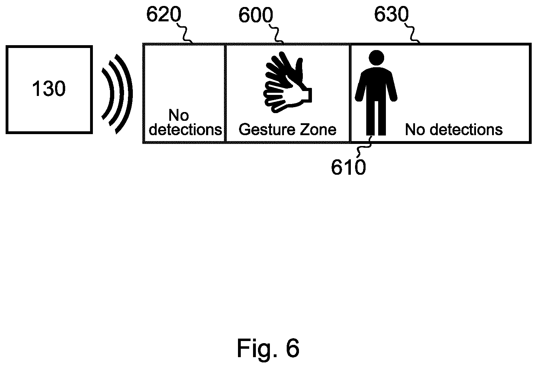

An exemplary gesture detection zone 600 is illustrated in **Fig. 6****.** In accordance with what is described above, the gesture detection zone 600 extends exclusively in front of the person 610 nearest to the FMCW radar sensor 130. Accordingly, no gesture detection is performed in the zone (space) 630 behind the nearest person 610 as the hands of the nearest person 610 are considered to face the FMCW sensor 130 while gesturing. The gesture detection zone 600 does not cover the whole range between FMCW radar sensor 130 and the nearest person 610. For example, the gesture detection zone 600 may cover only a certain distance range in front of the nearest person 610 as the arm length of the nearest person 610 and, hence, the space in which the nearest person 610 can gesture with his hands is limited. Accordingly, there may be a zone, such as the zone 620 illustrated in Fig. 6, between the FMCW radar sensor 130 and the gesture detection zone 600, in which no gesture detection is performed.

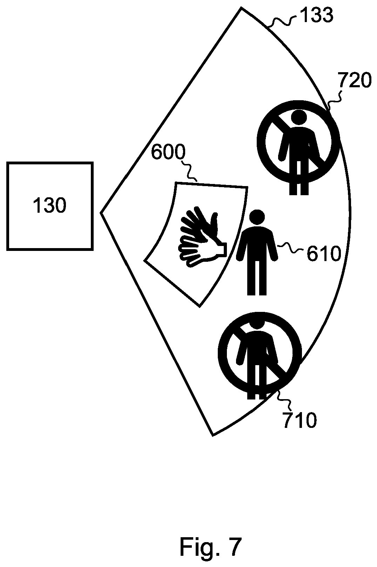

**Fig. 7** illustrates another effect of the limitation of the search to the gesture detection zone 600. As the gesture detection zone 600 is limited to a space in front of the nearest person 610, movements or gestures from people further away than the nearest person 610 are ignored. In the example of Fig. 7, the two people 710 and 720 are spaced further apart from the FMCW radar sensor 130. Accordingly, their movements or gestures are ignored. This may allow to avoid or at least reduce erroneous detection of gestures from people not intended to control a device.

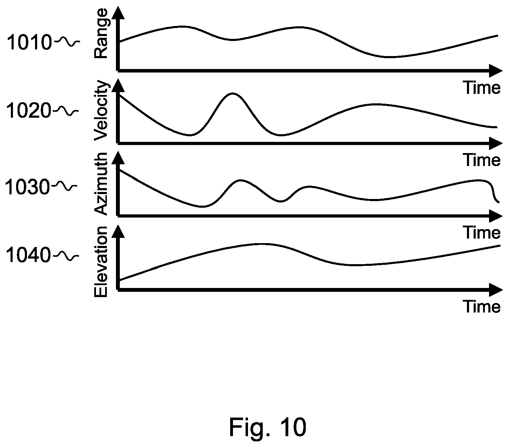

Referring back to Fig. 1, if a hand movement of the person is detected in the determined gesture detection zone, the processing circuitry 120 is configured to extract a time-series of one or more feature of the hand movement. Furthermore, the processing circuitry 120 is configured to determine a gesture of the person based on the time-series of the one or more feature of the hand movement. A feature is an individual measurable property or characteristic of the hand movement. For example, the one or more feature of the hand movement may exclusively be a respective physical quantity describing the hand movement. Various features or physical quantities allow to characterize the hand movement. A few examples will be described later with reference to Fig. 10. A time-series is a series of data points (samples) representing a feature and indexed (listed) in time order. The time series may be a sequence of data points taken at successive equally or unequally spaced points in time. Various techniques may be used for determining a gesture of the person based on the time-series of the one or more feature of the hand movement. A few examples will be described later with reference to Fig. 10.

The search for hand movements of the person exclusively in the gesture detection zone together with the extraction of a time-series of one or more feature of the hand movement allow to provide physical measurements which allow to focus on only relevant data, reduce the processing footprint (e.g., computation and memory consumption) compared to conventional approaches, and radar parameter agnostic gesture sensing. Moreover, the physical measurements may allow data augmentation, synthetic data generation and data inspection.

In the following, two examples will be given how to search the gesture detection zone for hand movements. The first example relates to searching hand movements in a range-Doppler representation of the radar data 101. **Fig. 8** illustrates in the left part an exemplary range-Doppler representation 800. The abscissa denotes the Doppler frequency (velocity) and the ordinate donates the range in arbitrary units.

The nearest person 810 is detected according to one of the techniques described above (e.g., as described with reference to Fig. 5). Accordingly, a gesture detection zone is defined in the range-Doppler representation 800. In particular, the gesture detection zone is defined by the processing circuitry 120 by defining a second sub-range 820 in the range-Doppler representation 800 of the radar data 101. The second sub-range 820 is different from the first sub-range used in the example of Fig. 5 for determining the person nearest to the FMCW radar sensor 130. As described above, the gesture detection zone covers exclusively ranges up to the determined range of the person 810 nearest to the FMCW radar sensor 130. The range of the nearest person 810 is indicated by line 815 in Fig. 8. Accordingly, the second sub-range 820 only extends below the line 815 in the range-Doppler representation 800 as this sub-range of the range-Doppler representation 800 covers the ranges equal to or smaller than the range of the nearest person 810.

It is to be noted that the gesture detection zone. i.e., second sub-range 820 may cover all Doppler frequency (velocity) values or be limited to one or more specific value range for the Doppler frequency (velocity).

The processing circuitry 120 is configured to search exclusively the gesture detection zone for hand movements of the nearest person 810 by searching exclusively in the second sub-range 820 for hand movements of the person

A zoom into the second sub-range 820 is illustrated in the right part of Fig. 8. As indicated by means of the box 840 in the right part of Fig. 8, the position of the nearest person 810 is masked in the range-Doppler representation 800 such that the body of the nearest person 810 is excluded from the search space for hand movements of the nearest person 810 (i.e., the second sub-range 820). It is to be noted that the masking of the body of the nearest person 810 is an optional feature that allows to further improve the search for hand movements of the nearest person 810.

The processing circuitry 120 is configured to select an entry having an amplitude above a second amplitude threshold in the second sub-range 820 as entry representing the hand movement of the nearest person 810. The second threshold allows to separate hand movements of the nearest person 810 from noise and small targets. The second amplitude threshold may be predefined or be adaptive. For example, the second amplitude threshold may be dynamically adapted based on a CFAR determined by the processing circuitry 120. In the example of Fig. 8, the entry 830 in the second sub-range 820 exhibits an amplitude above the second amplitude threshold and is accordingly selected as entry representing the hand movement of the nearest person 810. In a subsequent step, one or more feature of the hand movement are extracted from the entry 830.

The second example of how to search the gesture detection zone for hand movements relates to searching hand movements in a range-angle representation of the radar data 101.

**Fig. 9** illustrates in the left part an exemplary range-angle representation 900 of the radar data 101. The abscissa denotes the angle and the ordinate donates the range.

The nearest person 910 is detected according to one of the techniques described above. Accordingly, a gesture detection zone is defined in the range- angle representation 900. In particular, the gesture detection zone is defined by the processing circuitry 120 by determining an angle of the person 910 nearest to the FMCW radar sensor 130 in the range-angle representation 900. Furthermore, the processing circuitry 120 is configured to define the gesture detection zone by defining a second sub-range 920 in the range-angle representation 900 based on the determined angle of the nearest person 910 and the range of the nearest person 910. The second sub-range 920 covers exclusively ranges and angles within the gesture detection zone.

The second sub-range 920 is different from the first sub-range used for determining the person 910 nearest to the FMCW radar sensor 130 in the range-angle representation 900. Furthermore, it is to be noted that the second sub-range 920 is different from the second sub-range 820 used in the example of Fig. 8 for the search in the range-Doppler representation of the radar data. As described above, the gesture detection zone covers exclusively ranges up to the determined range of the person 910 nearest to the FMCW radar sensor 130. Accordingly, the second sub-range 920 only extends below the nearest person in the range-angle representation 900 as this sub-range of the range- angle representation 900 covers the ranges equal to or smaller than the range of the nearest person 910. Furthermore, the value range of angles covered by the second sub-range 920 is limited. The value range of angles covered by the second sub-range 920 is determined based on the determined angle of the nearest person 910 to cover only the space in the immediate vicinity of the nearest person 910. By limiting the ranges and angles covered by the gesture detection zone as described above, the gesture detection zone is limited to a limited space in front of the nearest person 910. This is further illustrated in the right part of Fig. 9, which shows how the second sub-range 920 translates into a limited space in front of the nearest person 910. Accordingly, the gesture detection zone can be limited to a space in which gestures of the nearest person can be expected.

The processing circuitry 120 is configured to search exclusively the gesture detection zone for hand movements of the nearest person 910 by searching exclusively in the second sub-range 920 for hand movements of the person.

The processing circuitry 120 is configured to select an entry having an amplitude above a second amplitude threshold in the second sub-range 920 as entry representing the hand movement of the nearest person 910. The second threshold allows to separate hand movements of the nearest person 910 from noise and small targets. The second amplitude threshold may be predefined or be adaptive. For example, the second amplitude threshold may be dynamically adapted based on a CFAR determined by the processing circuitry 120. In the example of Fig. 9, the entry 930 in the second sub-range 920 exhibits an amplitude above the second amplitude threshold and is accordingly selected as entry representing the hand movement of the nearest person 910. In a subsequent step, one or more feature of the hand movement are extracted from the entry 930. The entries 940 and 950 outside the second sub-range 920 are ignored such that computational costs (efforts) are reduced.

Similarly to what is described above, the position (range) of the nearest person 910 may optionally be masked in the range-angle representation 900 such that the body of the nearest person 910 is excluded from the search space for hand movements of the nearest person 910 (i.e., the second sub-range 920).

As described in the previous examples, the gesture detection zone is anchored to the determined nearest person and extends between the nearest person and the FMCW radar sensor. The gesture detection may be one-dimensional (i.e., only limited in range) or be multidimensional (i.e., be limited in range, velocity, angle or any combination thereof).

In order to keep track of movements (position changes) of the persons in the FoV 133 of the FMCW radar sensor 130, the processing circuitry 130 is configured to continuously determine the range of the person nearest to the FMCW radar sensor 130. Accordingly, the processing circuitry 130 is configured to dynamically update the gesture detection zone based on the continuously determined range of the person nearest to the FMCW radar sensor 130. Similarly, the processing circuitry 130 may be configured to continuously determine one or more of the person nearest to the FMCW radar sensor 130 and the angle of the person nearest to the FMCW radar sensor 130. Accordingly, the processing circuitry 130 may be configured to dynamically update the gesture detection zone based on one or more of the continuously determined person nearest to the FMCW radar sensor 130 and the continuously determined angle of the person nearest to the FMCW radar sensor 130. For example, the above parameters may be determined for each frame such that the gesture detection zone is dynamically updated every frame.

The size of the gesture detection zone may be predefined and independent from the determined range of the person. Accordingly, the respective size of the second sub-ranges 820 and 920 described above may be predefined. In alternative examples, at least one of a range and a size (or volume) of the gesture detection zone may be adjustable. For example, the processing circuitry 120 may be configured to dynamically update at least one of a range and a size (or volume) of the gesture detection zone based on the continuously determined range of the person nearest to the FMCW radar sensor 130. The range of the gesture detection zone denotes that maximum range value covered by the gesture detection zone. The size of the gesture detection zone denotes the extension of the gesture detection zone along the range dimension and one or more dimensions perpendicular thereto. The processing circuitry 120 may, e.g., be configured to determine the size of the gesture detection zone based on the determined range of the person nearest to the FMCW radar sensor 130. Adjusting the size of the gesture detection zone based on the determined range of the nearest person may allow to account for range dependent effects of the radar measurement. For example, the gesture detection zone may be smaller if the nearest person is closer to the FMCW radar sensor 130 and be larger if the nearest person is further away from the FMCW radar sensor 130 to account for range-dependent measurement inaccuracies of the FMCW radar sensor 130.

As described above, the one or more extracted feature of the hand movement may exclusively be a respective physical quantity describing the hand movement. This is exemplarily illustrated in **Fig. 10** showing exemplary physical quantities. The one or more physical quantities are extracted from the multidimensional array representation of the radar data 101 or a representation derived therefrom. Fig. 10 illustrates four time-series of physical quantities describing the hand movement.

In particular, Fig. 10 illustrates a first time-series 1010 of a range of the nearest person's hand, a second time-series 1020 of a (e.g., radial) velocity of the nearest person's hand, a third time-series 1030 of an azimuth angle of the nearest person's hand and a fourth time-series 1040 of an elevation angle of the nearest person's hand. Each of the quantities is a physical quantity describing the hand movement. Therefore, the one or more feature of the hand movement may be at least one of a range, a velocity, an azimuth angle and an elevation angle of the nearest person's hand.

As the quantities (measurements) used for determining the gesture of the person are physical quantities, the proposed technique is independent of the configuration of the radar sensor. Furthermore, the physical quantities are interpretable by a human being, which allows for meaningful data augmentation. Moreover, abstraction of the physical quantities (e.g., obtaining of single values per measurement) may allow to use compact and processing efficient classification methods for the gesture determination.

Extracting features such as physical quantities from a multidimensional array representation of the radar data 101 such as a range-Doppler representation or a range-angle representation are well known to those skilled in the art. Therefore, no further explanations on this aspect will be given.

As described above, the processing circuitry 120 is configured to determine a gesture of the person based on the time-series of the one or more feature of the hand movement. For example, the processing circuitry 120 may be configured to map the time-series of the one or more feature to one of a plurality of predefined gestures according to a predefined mapping scheme (i.e., a predefined set of rules). However, the present disclosure is not limited thereto. In other examples, the processing circuitry 120 may be configured to determine the gesture of the person using a trained machine-learning model. The trained machine-learning model is configured to receive the time-series of the one or more feature of the hand movement as input and to output the gesture of the person based on the input time-series of the one or more feature of the hand movement. The trained machine-learning model acts as a classifier that identifies which of a plurality of candidate gestures the extracted time-series of the one or more feature of the hand movement belongs to.

The machine-learning model is a data structure and/or set of rules representing a statistical model that the processing circuitry 120 uses to perform the above tasks without using explicit instructions, instead relying on models and inference. The data structure and/or set of rules represents learned knowledge (e.g. based on training performed by a machine-learning algorithm). For example, in machine-learning, instead of a rule-based transformation of data, a transformation of data may be used, that is inferred from an analysis of historical and/or training data. In the proposed technique, the content of the time-series of the one or more feature of the hand movement is analyzed using the machine-learning model (i.e. a data structure and/or set of rules representing the model).

The machine-learning model is trained by a machine-learning algorithm. The term "machine-learning algorithm" denotes a set of instructions that are used to create, train or use a machine-learning model. For the machine-learning model to analyze the content of the time-series of the one or more feature of the hand movement, the machine-learning model may be trained using training and/or historical time-series of the one or more feature of the hand movement as input and training content information (e.g. labels indicating the gesture of the person) as output. By training the machine-learning model with a large set of training radar data and associated training content information (e.g. labels or annotations), the machine-learning model "learns" to recognize the content of the time-series of the one or more feature of the hand movement, so the content of the time-series of the one or more feature of the hand movement that are not included in the training data can be recognized using the machine-learning model. By training the machine-learning model using training time-series of the one or more feature of the hand movement and a desired output, the machine-learning model "learns" a transformation between the time-series of the one or more feature of the hand movement and the output, which can be used to provide an output based on non-training radar data provided to the machine-learning model.

The machine-learning model may be trained using training input data (e.g. training time-series of the one or more feature of the hand movement). For example, the machine-learning model may be trained using a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. For example, a training sample may comprise training time-series of the one or more feature of the hand movement as input data and one or more labels as desired output data. The labels indicate gestures of a person.

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input is classified to one of the limited set of values (type of gesture). Similarity learning algorithms are similar to classification algorithms but are based on learning from examples using a similarity function that measures how similar or related two objects are.

Apart from supervised or semi-supervised learning, unsupervised learning may be used to train the machine-learning model. In unsupervised learning, (only) input data are supplied and an unsupervised learning algorithm is used to find structure in the input data such as training and/or historical time-series of the one or more feature of the hand movement (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. For example, unsupervised learning may be used to train the machine-learning model to detect (the type of) the gesture. The input data for the unsupervised learning may be training or historical time-series of the one or more feature of the hand movement.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such that the cumulative reward is increased, leading to software agents that become better at the task they are given (as evidenced by increasing rewards). Reinforcement learning may be used to train the machine-learning model to determine detect the (type of the) gesture.

Furthermore, additional techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, the machine-learning algorithm may use a decision tree as a predictive model. In other words, the machine-learning model may be based on a decision tree. In a decision tree, observations about an item (e.g. time-series of the one or more feature of the hand movement) may be represented by the branches of the decision tree, and an output value corresponding to the item may be represented by the leaves of the decision tree. Decision trees support discrete values and continuous values as output values. If discrete values are used, the decision tree may be denoted a classification tree, if continuous values are used, the decision tree may be denoted a regression tree. For example, the machine-learning algorithm may use a decision tree for determining the (type of the) gesture.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may, e.g., be used to store, manipulate or apply the knowledge.

For example, the machine-learning model may be an Artificial Neural Network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values (e.g. time-series of the one or more feature of the hand movement), hidden nodes that are (only) connected to other nodes, and output nodes that provide output values (e.g. gesture of the person). Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input. For example, the trained machine-learning may be a trained recurrent neural network or a trained temporal convolutional neural network (e.g. Inception Time) acting as classifier.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values (e.g. radar data) that belong to one of two categories (e.g. high execution quality and low execution quality of the physical exercise). The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection. Also frequency based or distance based machine-learning models may be used. In some examples, the machine-learning model may be a combination of the above examples.

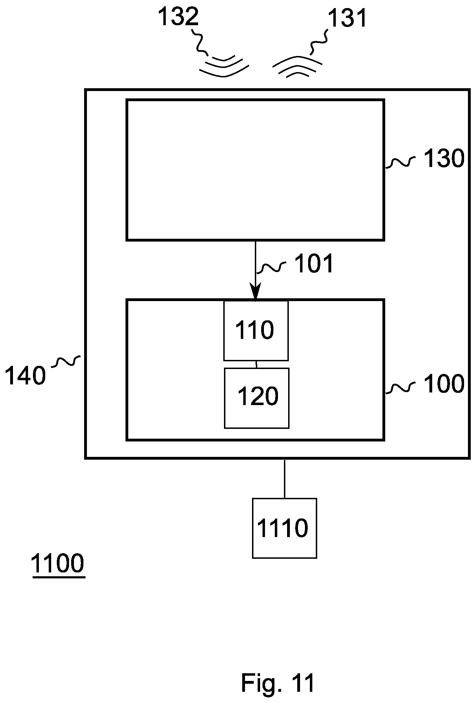

The apparatus 100 for gesture detection as well as the radar system 140 may be used in various applications. **Fig. 11** illustrates an exemplary electronic device 1100 comprising the radar system 140 and control circuitry 1110.

The control circuitry 1110 may be implemented analogously to the processing circuitry 120 of the radar system. For example, the control circuitry 1110 may be a single dedicated processor, a single shared processor, or a plurality of individual processors, some of which or all of which may be shared, a DSP hardware, an ASIC, a neuromorphic processor or a FPGA. The control circuitry 1110 may optionally be coupled to, e.g., ROM for storing software, RAM and/or non-volatile memory. The processing circuitry 120 is configured to process the gesture determined by the apparatus 100. In particular, the control circuitry 1110 is configured to control operation of the electronic device 1100 based on the gesture determined by the apparatus 100. In other words, the control circuitry 1110 is configured to adjust the operation of the electronic device 1100 based on the determined gesture. For example, the control circuitry 1110 may be configured to change an operation mode of the electronic device 1100 based on the determined gesture.

The electronic device 1100 may allow to provide a low-cost, low-energy and touchless Human-Machine Interface (HMI) based on radar technology for various applications. For example, the electronic device 1100 may be one of a mobile device (e.g., a mobile phone, laptop-computer or tablet-computer), a television set, a radio, a video game console, an equipment for a video game console (e.g., an input equipment), a vending machine (e.g., a beverage machine or a snack machine), a kitchen gear (e.g., a stove, a dishwasher or a mixer), an electrical household equipment (e.g., a fridge, a freezer, a washing machine or a dryer), an Internet-of-Things (IoT) device and a vehicle (e.g., a land vehicle, a watercraft vehicle or an aircraft).

Although the control circuitry 1110 is illustrated as separate element in the example of Fig. 11. It is to be noted that the processing circuitry 120 and the control circuitry 1110 may be implemented integrally (i.e., as a single circuitry) according to examples of the present disclosure.

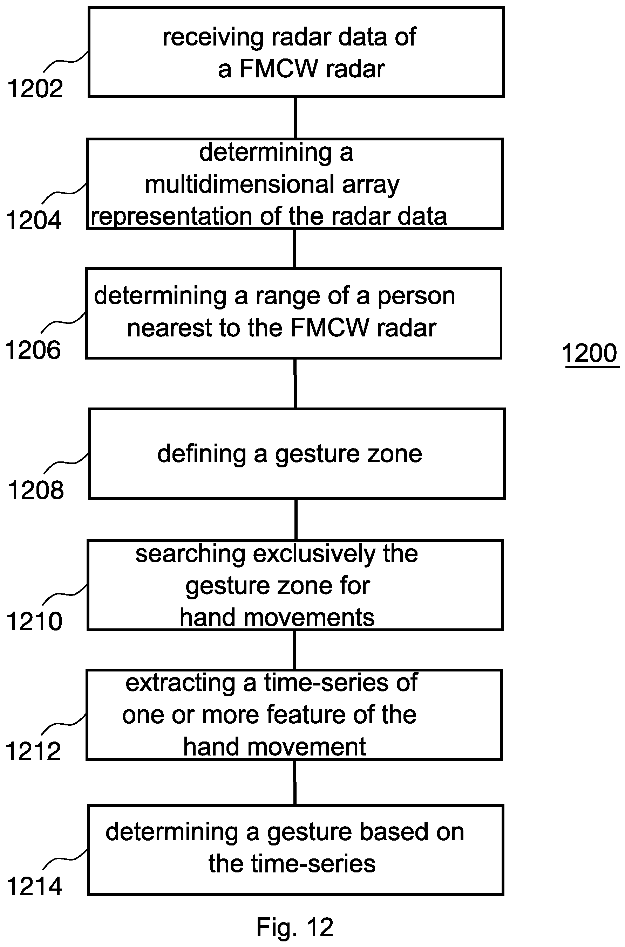

Summarizing the above, **Fig. 12** further illustrates a flowchart of an example of a (e.g. computer-implemented) method 1200 for gesture detection. The method 1200 comprises receiving 1202 radar data indicating one or more measurement signal of a FMCW radar sensor. Further, the method 1200 comprises determining 1204 a multidimensional array representation of the radar data. The method 1200 additionally comprises determining 1206 a range of a person nearest to the FMCW radar sensor from the multidimensional array representation of the radar data. In addition, the method 1200 comprises defining 1208 a gesture detection zone based on the determined range of the person. The gesture detection zone covers exclusively ranges up to the determined range of the person. Further, the method 1200 comprises searching 1210 exclusively the gesture detection zone for hand movements of the person. If a hand movement of the person is detected in the gesture detection zone, the method 1200 comprises extracting 1212 a time-series of one or more feature of the hand movement. In addition, the method 1200 comprises determining 1214 a gesture of the person based on the time-series of the one or more feature of the hand movement.

Similar what is described above, the method 1200 may allow provide physical measurements which allow to focus on only relevant data, reduce the processing footprint (e.g., computation and memory consumption) compared to conventional approaches, and radar parameter agnostic gesture sensing.

More details and aspects of the method 1200 are explained in connection with the proposed technique or one or more example described above. The method 1200 may comprise one or more additional optional features corresponding to one or more aspects of the proposed technique, or one or more example described above.

Aspects of the present disclosure may allow radar based gesture detection using a time-series of physical measurements. Examples of the present disclosure provide a radar based gesture recognition by using a time-series of physical measurements of the hand. In order to prevent false alarms, the position of the closest person is estimated & builds an anchor for a gesture detection zone, where possible gestures are detected.

Examples relating to a (computer) program include a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (F)PGAs, graphics processor units (GPU), ASICs, integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An apparatus (100) for gesture detection, comprising:
interface circuitry (110) configured to receive radar data (101) indicating one or more measurement signal of a Frequency-Modulated Continuous-Wave, FMCW, radar sensor (130); and
processing circuitry (120) coupled to the interface circuitry (110) and being configured to:
determine a multidimensional array representation of the radar data (101);
continuously determine a range of a person nearest to the FMCW radar sensor (130) from the multidimensional array representation of the radar data (101);
define a gesture detection zone (600) and dynamically update the gesture detection zone (600) based on the continuously determined range of the person, the gesture detection zone (600) covering exclusively ranges up to the determined range of the person;
search exclusively the gesture detection zone (600) for hand movements of the person;
if a hand movement of the person is detected in the gesture detection zone (600), extract a time-series of one or more feature of the hand movement; and
determine a gesture of the person based on the time-series of the one or more feature of the hand movement.

2. The apparatus (100) of claim 1, wherein the multidimensional array representation of the radar data (101) is a range-Doppler representation (500) of the radar data (101), and wherein the processing circuitry (120) is configured to determine the range of the person nearest to the FMCW radar sensor (130) using the steps of:
searching for entries having an amplitude above a first amplitude threshold in a predefined first sub-range (550) in the range-Doppler representation (500) of the radar data (101), the predefined first sub-range (550) covering exclusively non-zero velocities below a predefined velocity threshold;
selecting the entry in the predefined first sub-range (550) having the shortest range to the FMCW radar sensor (130) as entry representing the person nearest to the FMCW radar sensor (130); and
determining the range of the selected entry as the range of the person nearest to the FMCW radar sensor (130).

3. The apparatus (100) of claim 1, wherein the multidimensional array representation of the radar data (101) is a range-angle representation of the radar data (101), and wherein the processing circuitry (120) is configured to determine the range of the person nearest to the FMCW radar sensor (130) using the steps of:
searching for entries having an amplitude above a first amplitude threshold in a predefined first sub-range in the range-angle representation of the radar data (101), the predefined first sub-range covering exclusively angles below a predefined angle threshold;
selecting the entry in the predefined sub-range having the shortest range to the FMCW radar sensor (130) and being consistently detected over multiple frames as entry representing the person nearest to the FMCW radar sensor (130); and
determining the range of the selected entry as the range of the person nearest to the FMCW radar sensor (130).

4. The apparatus (100) of claim 1 or claim 2, wherein the processing circuitry (120) is configured to:
define the gesture detection zone (600) by defining a second sub-range (820) in a range-Doppler representation (800) of the radar data (101), the second sub-range (820) covering exclusively ranges within the gesture detection zone (600);
search exclusively the gesture detection zone (600) for hand movements of the person by searching exclusively in the second sub-range (820) for hand movements of the person.

5. The apparatus (100) of claim 4, wherein the processing circuitry (120) is configured to select an entry having an amplitude above a second amplitude threshold in the second sub-range (820) as entry representing the hand movement of the person.

6. The apparatus (100) of claim 1 or claim 3, wherein the processing circuitry (120) is configured to:
determine an angle of the person nearest to the FMCW radar sensor (130) in a range-angle representation (900) of the radar data (101);
define the gesture detection zone (600) by defining a second sub-range (920) in the range-angle representation (900) of the radar data (101) based on the determined angle of the person nearest to the FMCW radar sensor (130), the second sub-range (920) covering exclusively ranges and angles within the gesture detection zone (600);
search exclusively the gesture detection zone (600) for hand movements of the person by searching exclusively in the second sub-range (920) for hand movements of the person.

7. The apparatus (100) of claim 6, wherein the processing circuitry (120) is configured to select an entry having an amplitude above a second amplitude threshold in the second sub-range (920) as entry representing the hand movement of the person.

8. The apparatus (100) of any one of claims 1 to 7, wherein the processing circuitry (120) is configured to dynamically update at least one of a range and a size of the gesture detection zone (600) based on the continuously determined range of the person nearest to the FMCW radar sensor (130).

9. The apparatus (100) of any one of claims 1 to 8, wherein the processing circuitry (120) is configured to determine a size of the gesture detection zone (600) based on the determined range of the person.

10. The apparatus (100) of any one of claims 1 to 8, wherein a size of the gesture detection zone (600) is predefined and independent from the determined range of the person.

11. The apparatus (100) of any one of claims 1 to 10, wherein the processing circuitry (120) is configured to determine the gesture of the person using a trained machine-learning model, the trained machine-learning model being configured to receive the time-series of the one or more feature of the hand movement as input and to output the gesture of the person based on the input time-series of the one or more feature of the hand movement.

12. The apparatus (100) of any one of claims 1 to 11, wherein the one or more feature of the hand movement is exclusively a respective physical quantity describing the hand movement.

13. The apparatus (100) of any one of claims 1 to 12, wherein the processing circuitry (120) is configured to determine the multidimensional array representation of the radar data(101) using moving target indication processing to suppress static targets in the multidimensional array representation of the radar.

14. A computer-implemented method for gesture detection, comprising:
receiving radar data indicating one or more measurement signal of a Frequency-Modulated Continuous-Wave, FMCW, radar sensor;
determining a multidimensional array representation of the radar data;
continuously determining a range of a person nearest to the FMCW radar sensor from the multidimensional array representation of the radar data;
defining a gesture detection zone and dynamically updating the gesture detection zone (600) based on the continuously determined range of the person, the gesture detection zone covering exclusively ranges up to the determined range of the person;
searching exclusively the gesture detection zone for hand movements of the person;
if a hand movement of the person is detected in the gesture detection zone, extracting a time-series of one or more feature of the hand movement; and
determining a gesture of the person based on the time-series of the one or more feature of the hand movement.

15. A radar system (140), comprising:
an apparatus (100) for gesture detection according to any one of claims 1 to 13; and
the FMCW radar sensor (130), wherein the FMCW radar sensor (130) is configured to:
transmit radio frequency waves (131) into a field of view (133) of the FMCW radar sensor (130); and
generate the radar data (101) based on received reflections (132) of the transmitted radio frequency waves (131).

## Patentansprüche

1. Vorrichtung (100) zur Gestenerkennung, umfassend:
eine Schnittstellenschaltungsanordnung (110), die dazu ausgelegt ist, Radardaten (101) zu empfangen, die ein oder mehrere Messsignale eines Radarsensors (130) mit frequenzmodulierter Dauerstrichwelle, FMCW, angeben; und
eine Verarbeitungsschaltungsanordnung (120), die mit der Schnittstellenschaltungsanordnung (110) gekoppelt und zu Folgendem ausgelegt ist:
Bestimmen einer mehrdimensionalen Arraydarstellung der Radardaten (101);
kontinuierlichen Bestimmen einer Entfernung einer Person, die dem FMCW-Radarsensor (130) am nächsten ist, aus der mehrdimensionalen Arraydarstellung der Radardaten (101);
Definieren einer Gestenerkennungszone (600) und dynamisches Aktualisieren der Gestenerkennungszone (600) basierend auf der kontinuierlich bestimmten Entfernung der Person, wobei die Gestenerkennungszone (600) ausschließlich Entfernungen bis zu der bestimmten Entfernung der Person abdeckt;
Durchsuchen ausschließlich der Gestenerkennungszone (600) nach Handbewegungen der Person;
falls eine Handbewegung der Person in der Gestenerkennungszone (600) erkannt wird, Extrahieren einer Zeitreihe eines oder mehrerer Merkmale der Handbewegung; und
Bestimmen einer Geste der Person basierend auf der Zeitreihe des einen oder der mehreren Merkmale der Handbewegung.

2. Vorrichtung (100) nach Anspruch 1, wobei die mehrdimensionale Arraydarstellung der Radardaten (101) eine Entfernungs-Doppler-Darstellung (500) der Radardaten (101) ist und wobei die Verarbeitungsschaltungsanordnung (120) dazu ausgelegt ist, die Entfernung der Person, die dem FMCW-Radarsensor (130) am nächsten ist, unter Verwendung der folgenden Schritte zu bestimmen:
Suchen nach Einträgen mit einer Amplitude über einer ersten Amplitudenschwelle in einem vordefinierten ersten Teilbereich (550) in der Entfernungs-Doppler-Darstellung (500) der Radardaten (101), wobei der vordefinierte erste Teilbereich (550) ausschließlich Geschwindigkeiten ungleich null unter einer vordefinierten Geschwindigkeitsschwelle abdeckt;
Auswählen des Eintrags in dem vordefinierten ersten Teilbereich (550) mit der kürzesten Entfernung zu dem FMCW-Radarsensor (130) als Eintrag, der die Person darstellt, die dem FMCW-Radarsensor (130) am nächsten ist; und
Bestimmen der Entfernung des ausgewählten Eintrags als Entfernung der Person, die dem FMCW-Radarsensor (130) am nächsten ist.

3. Vorrichtung (100) nach Anspruch 1, wobei die mehrdimensionale Arraydarstellung der Radardaten (101) eine Entfernungswinkeldarstellung der Radardaten (101) ist und wobei die Verarbeitungsschaltungsanordnung (120) dazu ausgelegt ist, die Entfernung der Person, die dem FMCW-Radarsensor (130) am nächsten ist, unter Verwendung der folgenden Schritte zu bestimmen:
Suchen nach Einträgen mit einer Amplitude über einer ersten Amplitudenschwelle in einem vordefinierten ersten Teilbereich in der Entfernungswinkeldarstellung der Radardaten (101), wobei der vordefinierte erste Teilbereich ausschließlich Winkel unter einer vordefinierten Winkelschwelle abdeckt;
Auswählen des Eintrags in dem vordefinierten Teilbereich, der die kürzeste Entfernung zu dem FMCW-Radarsensor (130) aufweist und der über mehrere Frames beständig erkannt wird, als Eintrag, der die Person darstellt, die dem FMCW-Radarsensor (130) am nächsten ist; und
Bestimmen der Entfernung des ausgewählten Eintrags als Entfernung der Person, die dem FMCW-Radarsensor (130) am nächsten ist.

4. Vorrichtung (100) nach Anspruch 1 oder 2, wobei die Verarbeitungsschaltungsanordnung (120) zu Folgendem ausgelegt ist:
Definieren der Gestenerkennungszone (600) durch Definieren eines zweiten Teilbereichs (820) in einer Entfernungs-Doppler-Darstellung (800) der Radardaten (101), wobei der zweite Teilbereich (820) ausschließlich Entfernungen innerhalb der Gestenerkennungszone (600) abdeckt;
Suchen ausschließlich nach Handbewegungen der Person in der Gestenerkennungszone (600), indem ausschließlich in dem zweiten Teilbereich (820) nach Handbewegungen der Person gesucht wird.

5. Vorrichtung (100) nach Anspruch 4, wobei die Verarbeitungsschaltungsanordnung (120) dazu ausgelegt ist, einen Eintrag mit einer Amplitude über einer zweiten Amplitudenschwelle in dem zweiten Teilbereich (820) als Eintrag auszuwählen, der die Handbewegung der Person darstellt.

6. Vorrichtung (100) nach Anspruch 1 oder 3, wobei die Verarbeitungsschaltungsanordnung (120) zu Folgendem ausgelegt ist:
Bestimmen eines Winkels der Person, die dem FMCW-Radarsensor (130) am nächsten ist, in einer Entfernungswinkeldarstellung (900) der Radardaten (101);
Definieren der Gestenerkennungszone (600) durch Definieren eines zweiten Teilbereichs (920) in der Entfernungswinkeldarstellung (900) der Radardaten (101) basierend auf dem bestimmten Winkel der Person, die dem FMCW-Radarsensor (130) am nächsten ist, wobei der zweite Teilbereich (920) ausschließlich Entfernungen und Winkel innerhalb der Gestenerkennungszone (600) abdeckt;
Suchen ausschließlich nach Handbewegungen der Person in der Gestenerkennungszone (600), indem ausschließlich in dem zweiten Teilbereich (920) nach Handbewegungen der Person gesucht wird.

7. Vorrichtung (100) nach Anspruch 6, wobei die Verarbeitungsschaltungsanordnung (120) dazu ausgelegt ist, einen Eintrag mit einer Amplitude über einer zweiten Amplitudenschwelle in dem zweiten Teilbereich (920) als Eintrag auszuwählen, der die Handbewegung der Person darstellt.

8. Vorrichtung (100) nach einem der Ansprüche 1 bis 7, wobei die Verarbeitungsschaltungsanordnung (120) dazu ausgelegt ist, mindestens eines von einer Entfernung und/oder einer Größe der Gestenerkennungszone (600) basierend auf der kontinuierlich bestimmten Entfernung der Person, die dem FMCW-Radarsensor (130) am nächsten ist, dynamisch zu aktualisieren.

9. Vorrichtung (100) nach einem der Ansprüche 1 bis 8, wobei die Verarbeitungsschaltungsanordnung (120) dazu ausgelegt ist, eine Größe der Gestenerkennungszone (600) basierend auf der bestimmten Entfernung der Person zu bestimmen.

10. Vorrichtung (100) nach einem der Ansprüche 1 bis 8, wobei eine Größe der Gestenerkennungszone (600) vordefiniert und unabhängig von der bestimmten Entfernung der Person ist.

11. Vorrichtung (100) nach einem der Ansprüche 1 bis 10, wobei die Verarbeitungsschaltungsanordnung (120) dazu ausgelegt ist, die Geste der Person unter Verwendung eines trainierten Maschinenlernmodells zu bestimmen, wobei das trainierte Maschinenlernmodell dazu ausgelegt ist, die Zeitreihe des einen oder der mehreren Merkmale der Handbewegung als Eingabe zu empfangen und die Geste der Person basierend auf der eingegebenen Zeitreihe des einen oder der mehreren Merkmale der Handbewegung auszugeben.

12. Vorrichtung (100) nach einem der Ansprüche 1 bis 11, wobei es sich bei der einen oder den mehreren Merkmalen der Handbewegung ausschließlich um eine jeweilige physikalische Größe handelt, die die Handbewegung beschreibt.

13. Vorrichtung (100) nach einem der Ansprüche 1 bis 12, wobei die Verarbeitungsschaltungsanordnung (120) dazu ausgelegt ist, die mehrdimensionale Arraydarstellung der Radardaten (101) unter Verwendung einer Verarbeitung zur Anzeige beweglicher Ziele zu bestimmen, um statische Ziele in der mehrdimensionalen Arraydarstellung des Radars zu unterdrücken.

14. Computerimplementiertes Verfahren zur Gestenerkennung, das Folgendes umfasst:
Empfangen von Radardaten, die ein oder mehrere Messsignale eines Radarsensors mit frequenzmodulierter Dauerstrichwelle, FMCW, angeben;
Bestimmen einer mehrdimensionalen Arraydarstellung der Radardaten;
kontinuierliches Bestimmen einer Entfernung einer Person, die dem FMCW-Radarsensor am nächsten ist, aus der mehrdimensionalen Arraydarstellung der Radardaten;
Definieren einer Gestenerkennungszone und dynamisches Aktualisieren der Gestenerkennungszone (600) basierend auf der kontinuierlich bestimmten Entfernung der Person, wobei die Gestenerkennungszone ausschließlich Entfernungen bis zu der bestimmten Entfernung der Person abdeckt;
Suchen ausschließlich nach Handbewegungen der Person in der Gestenerkennungszone;
falls eine Handbewegung der Person in der Gestenerkennungszone erkannt wird, Extrahieren einer Zeitreihe eines oder mehrerer Merkmale der Handbewegung; und
Bestimmen einer Geste der Person basierend auf der Zeitreihe des einen oder der mehreren Merkmale der Handbewegung.

15. Radarsystem (140), umfassend:
eine Vorrichtung (100) zur Gestenerkennung nach einem der Ansprüche 1 bis 13; und
den FMCW-Radarsensor (130), wobei der FMCW-Radarsensor (130) zu Folgendem ausgelegt ist:
Senden von Hochfrequenzwellen (131) in ein Sichtfeld (133) des FMCW-Radarsensors (130); und
Erzeugen der Radardaten (101) basierend auf empfangenen Reflexionen (132) der gesendeten Hochfrequenzwellen (131).

## Revendications

1. Appareil (100) pour la détection de gestes, l'appareil comprenant :
des circuits d'interface (110) configurés pour recevoir des données radar (101) indiquant un ou plusieurs signaux de mesure d'un capteur radar à onde continue modulée en fréquence, FMCW (130) ; et
des circuits de traitement (120) couplés aux circuits d'interface (110) et configurés pour :
déterminer une représentation sous forme de tableau multidimensionnel des données radar (101) ;
déterminer en continu la distance de la personne la plus proche du capteur radar FMCW (130) à partir de la représentation sous forme de tableau multidimensionnel des données radar (101) ;
définir une zone de détection de gestes (600) et mettre à jour dynamiquement la zone de détection de gestes (600) sur la base de la distance déterminée en continu de la personne, la zone de détection de gestes (600) couvrant exclusivement des distances allant jusqu'à la distance déterminée de la personne ;
rechercher exclusivement dans la zone de détection de gestes (600) les mouvements de la main de la personne ;
si un mouvement de la main de la personne est détecté dans la zone de détection de gestes (600), extraire une série temporelle d'une ou plusieurs caractéristiques du mouvement de la main ; et
déterminer un geste de la personne sur la base de la série temporelle des une ou plusieurs caractéristiques du mouvement de la main.

2. Appareil (100) selon la revendication 1, dans lequel la représentation sous forme de tableau multidimensionnel des données radar (101) est une représentation en portée-Doppler (500) des données radar (101), et dans lequel les circuits de traitement (120) sont configurés pour déterminer la distance de la personne la plus proche du capteur radar FMCW (130) en utilisant les étapes suivantes :
rechercher des entrées ayant une amplitude supérieure à un premier seuil d'amplitude dans une première sous-plage prédéfinie (550) dans la représentation en portée-Doppler (500) des données radar (101), la première sous-plage prédéfinie (550) couvrant exclusivement des vitesses non nulles inférieures à un seuil de vitesse prédéfini ;
sélectionner l'entrée dans la première sous-plage prédéfinie (550) ayant la distance la plus courte par rapport au capteur radar FMCW (130) comme entrée représentant la personne la plus proche du capteur radar FMCW (130) ; et
déterminer la distance de l'entrée sélectionnée comme étant la distance de la personne la plus proche du capteur radar FMCW (130).

3. Appareil (100) selon la revendication 1, dans lequel la représentation sous forme de tableau multidimensionnel des données radar (101) est une représentation en portée-angle des données radar (101), et dans lequel les circuits de traitement (120) sont configurés pour déterminer la distance de la personne la plus proche du capteur radar FMCW (130) en utilisant les étapes suivantes :
rechercher des entrées ayant une amplitude supérieure à un premier seuil d'amplitude dans une première sous-plage prédéfinie dans la représentation en portée-angle des données radar (101), la première sous-plage prédéfinie couvrant exclusivement des angles inférieurs à un seuil d'angle prédéfini ;
sélectionner l'entrée dans la sous-plage prédéfinie ayant la distance la plus courte par rapport au capteur radar FMCW (130) et étant détectée de manière cohérente sur plusieurs trames comme entrée représentant la personne la plus proche du capteur radar FMCW (130) ; et
déterminer la distance de l'entrée sélectionnée comme étant la distance de la personne la plus proche du capteur radar FMCW (130).

4. Appareil (100) selon la revendication 1 ou la revendication 2, les circuits de traitement (120) étant configurés pour :
définir la zone de détection de gestes (600) en définissant une deuxième sous-plage (820) dans une représentation en portée-Doppler (800) des données radar (101), la deuxième sous-plage (820) couvrant exclusivement les distances situées dans la zone de détection de gestes (600) ;
rechercher exclusivement dans la zone de détection de gestes (600) les mouvements de la main de la personne en recherchant exclusivement dans la deuxième sous-plage (820) les mouvements de la main de la personne.

5. Appareil (100) selon la revendication 4, dans lequel les circuits de traitement (120) sont configurés pour sélectionner une entrée ayant une amplitude supérieure à un deuxième seuil d'amplitude dans la deuxième sous-plage (820) comme entrée représentant le mouvement de la main de la personne.

6. Appareil (100) selon la revendication 1 ou la revendication 3, les circuits de traitement (120) étant configurés pour :
déterminer l'angle de la personne la plus proche du capteur radar FMCW (130) dans une représentation en portée-angle (900) des données radar (101) ;
définir la zone de détection de gestes (600) en définissant une deuxième sous-plage (920) dans la représentation en portée-angle (900) des données radar (101) sur la base de l'angle déterminé de la personne la plus proche du capteur radar FMCW (130), la deuxième sous-plage (920) couvrant exclusivement des distances et des angles à l'intérieur de la zone de détection de gestes (600) ;
rechercher exclusivement dans la zone de détection de gestes (600) les mouvements de la main de la personne en recherchant exclusivement dans la deuxième sous-plage (920) les mouvements de la main de la personne.

7. Appareil (100) selon la revendication 6, dans lequel les circuits de traitement (120) sont configurés pour sélectionner une entrée ayant une amplitude supérieure à un deuxième seuil d'amplitude dans la deuxième sous-plage (920) comme entrée représentant le mouvement de la main de la personne.

8. Appareil (100) selon l'une quelconque des revendications 1 à 7, dans lequel les circuits de traitement (120) sont configurés pour mettre à jour de manière dynamique au moins l'une d'une distance et d'une taille de la zone de détection de gestes (600) sur la base de la distance déterminée en continu de la personne la plus proche du capteur radar FMCW (130).

9. Appareil (100) selon l'une quelconque des revendications 1 à 8, dans lequel les circuits de traitement (120) sont configurés pour déterminer la taille de la zone de détection de gestes (600) sur la base de la distance déterminée de la personne.

10. Appareil (100) selon l'une quelconque des revendications 1 à 8, dans lequel la taille de la zone de détection de gestes (600) est prédéfinie et indépendante de la distance déterminée de la personne.

11. Appareil (100) selon l'une quelconque des revendications 1 à 10, dans lequel les circuits de traitement (120) sont configurés pour déterminer le geste de la personne à l'aide d'un modèle d'apprentissage automatique entraîné, le modèle d'apprentissage automatique entraîné étant configuré pour recevoir la série temporelle des une ou plusieurs caractéristiques du mouvement de la main en tant qu'entrée et pour produire en sortie le geste de la personne sur la base de la série temporelle d'entrée des une ou plusieurs caractéristiques du mouvement de la main.

12. Appareil (100) selon l'une quelconque des revendications 1 à 11, dans lequel les une ou plusieurs caractéristiques du mouvement de la main sont exclusivement une quantité physique respective décrivant le mouvement de la main.

13. Appareil (100) selon l'une quelconque des revendications 1 à 12, dans lequel les circuits de traitement (120) sont configurés pour déterminer la représentation sous forme de tableau multidimensionnel des données radar (101) à l'aide d'un traitement d'indication de cible mobile afin de supprimer les cibles statiques dans la représentation sous forme de tableau multidimensionnel du radar.

14. Procédé mis en œuvre par ordinateur pour la détection de gestes, le procédé comprenant les étapes suivantes :
recevoir des données radar indiquant un ou plusieurs signaux de mesure d'un capteur radar à onde continue modulée en fréquence, FMCW ;
déterminer une représentation sous forme de tableau multidimensionnel des données radar ;
déterminer en continu la distance de la personne la plus proche du capteur radar FMCW à partir de la représentation sous forme de tableau multidimensionnel des données radar ;
définir une zone de détection de gestes et mettre à jour dynamiquement la zone de détection de gestes (600) sur la base de la distance déterminée en continu de la personne, la zone de détection de gestes couvrant exclusivement des distances allant jusqu'à la distance déterminée de la personne ;
rechercher exclusivement dans la zone de détection de gestes les mouvements de la main de la personne ;
si un mouvement de la main de la personne est détecté dans la zone de détection de gestes, extraire une série temporelle d'une ou plusieurs caractéristiques du mouvement de la main ; et
déterminer un geste de la personne sur la base de la série temporelle des une ou plusieurs caractéristiques du mouvement de la main.

15. Système radar (140) comprenant :
un appareil (100) pour la détection de gestes selon l'une quelconque des revendications 1 à 13 ; et
le capteur radar FMCW (130), où le capteur radar FMCW (130) est configuré pour :
transmettre des ondes radiofréquence (131) dans un champ de vision (133) du capteur radar FMCW (130) ; et
générer les données radar (101) sur la base des réflexions reçues (132) des ondes radiofréquence (131) transmises.
